# EUROPÄISCHE PATENTSCHRIFT

(11) **EP 2 007 542 B1**
(45) Veröffentlichungstag und Bekanntmachung des Hinweises auf die Patenterteilung: **28.04.2010**
(21) Anmeldenummer: 07701312.6
(22) Anmeldetag: 12.02.2007
(51) Int. Cl.: B23K 9/073

(54) **VERFAHREN ZUM SCHWEISSEN EINES WERKSTÜCKS**
METHOD OF WELDING A WORKPIECE
PROCEDE DE SOUDAGE D'UNE PIECE

(30) Priorität: 12.04.2006 AT 6322006
(43) Veröffentlichungstag der Anmeldung: 31.12.2008
(73) Patentinhaber: Fronius International GmbH, 4643 Pettenbach (AT)
(72) Erfinder: ARTELSMAIR, Josef, 4552 Wartberg/Krems (AT); LEEB, Josef, 4643 Pettenbach (AT)
(74) Vertreter: Sonn & Partner Patentanwälte
(86) Internationale Anmeldenummer: PCT/AT2007/000068
(87) Internationale Veröffentlichungsnummer: WO 2007/115342

(56) Entgegenhaltungen:
- EP-A- 0 668 711
- EP-A- 1 712 320
- DATABASE EPODOC EUROPEAN PATENT OFFICE, THE HAGUE, NL; 6. Juni 2000 (2000-06-06), ISHIKAWAJIMA HARIMA HEAVY IND CO LTD: "Automatic welding start control method" XP002432061 & JP 2000 153358 A (ISHIKAWAJIMA HARIMA HEAVY IND) 6. Juni 2000 (2000-06-06)
- DATABASE EPODOC EUROPEAN PATENT OFFICE, THE HAGUE, NL; 18. Mai 1992 (1992-05-18), PRESS KOGYO KK: "Welding arc starting method" XP002432062 in der Anmeldung erwähnt & JP 04 143074 A (PURESU KOUGIYOU KK) 18. Mai 1992 (1992-05-18)

## Beschreibung

Die Erfindung betrifft ein Verfahren zum Schweißen eines Werkstücks gemäß dem Oberbegriff des Anspruchs 1, mit einem Schweißbrenner mit einem abschmelzenden Schweißdraht, welcher während eines Schweißprozesses, während dem ein Lichtbogen zwischen dem Schweißdraht und dem Werkstück brennt, mittels eines Drahtvorschubgeräts im Wesentlichen in Richtung des Werkstücks bewegt wird, wobei ein Prozess zur Entfernung von Schlacke am Ende des Schweißdrahtes gestartet und durchgeführt wird.

Schweißverfahren mit Prozessen zur Entfernung von Schlacke sind aus dem Stand der Technik bereits bekannt. Beispielsweise zeigt die JP 4143074 A ein Verfahren, bei dem die Schlacke durch ein Reiben des Schweißdrahtes am Werkstück entfernt wird. Dies macht jedoch eine Bewegung des ganzen Roboterarmes, an dem der Schweißbrenner befestigt ist, notwendig. Darüber hinaus besteht die Gefahr, dass der Schweißdraht durch die mechanische Beeinflussung knickt.

Beim Verfahren gemäß der JP 5245637 A wird bei Zündproblemen der Schweißdraht mit bestimmtem Druck an die Oberfläche des Werkstücks gepresst und dadurch die Schlacke entfernt. Auch dabei kann es zu einer Beschädigung des Schweißdrahtes kommen.

Die JP 2000-153358 A beschreibt ein Zündverfahren bei dem der Schweißbrenner mit dem Schweißdraht so weit in Richtung des Werkstücks bewegt wird, bis der Schweißdraht das Werkstück berührt. Wenn die Berührungsspannung nicht gegen Null geht, ist dies ein Hinweis für das Vorhandensein von Schlacke, worauf der Brenner wieder in die Ausgangsposition und wieder in Richtung Werkstück bewegt wird.

Die Aufgabe der Erfindung liegt darin, ein Schweißverfahren zu schaffen, welches von einer am zu kontaktierenden Ende des Schweißdrahtes gegebenenfalls haftender Schlacke nicht beeinträchtigt wird und ein sicheres Zünden des Lichtbogens gewährleistet.

Die Aufgabe der Erfindung wird dadurch gelöst, dass mit Beginn des Schlacken-Entfernungsprozesses der Schweißstrom auf ein Minimum gesenkt wird, und beim Schlacken-Entfernungsprozess der Schweißbrenner keine Bewegung ausführt und der Schweißdraht mit einer schnellen wiederkehrenden Vor-/Rückwärtsbewegung zyklisch eine vorgegebene Weglänge in Richtung Werkstück und um eine kleinere Wegstrecke wieder vom Werkstück wegbewegt wird, sodass die Förderung des Schweißdrahtes zum Werkstück überwiegt, bis von einer Kurzschlussüberwachung ein Kurzschluss zwischen dem Schweißdraht und dem Werkstück erkannt wird, worauf der Schlacken-Entfernungsprozess beendet wird. Durch das erfindungsgemäße Verfahren muss das Schweißverfahren nicht aufgrund einer an dem zu kontaktierenden Ende des Schweißdrahtes allenfalls anhaftenden Schlacke, welche ein Zünden des Lichtbogens verhindert, unterbrochen werden. Durch den Schlacken-Entfernungsprozess wird gewährleistet, dass im Wesentlichen ohne Zeitverzögerung der Lichtbogen für den folgenden Schweißprozess sicher gezündet wird. Der Schlacken-Entfernungsprozess kann relativ einfach in einem geeigneten Schweißgerät implementiert werden, da zur Erkennung des Kurzschlusses eine an sich bekannte Kurzschlussüberwachung verwendet werden kann. Durch die Maßnahme des Senkens des Schweißstroms auf ein Minimum mit Beginn des Schlacken-Entfernungsprozesses wird ein Zünden des Lichtbogens in dieser Zeit verhindert, während ein Kurzschluss jedoch erkannt wird.

Der Schlacken-Entfernungsprozess kann in einem Zeitintervall zu Beginn eines Zündverfahrens, in einem Zeitintervall während eines Zündverfahrens, oder auch in einem Zeitintervall vor einem Zündverfahren durchgeführt werden.

Nach dem Entfernen der Schlacke vom Schweißdraht wird der Lichtbogen vorzugsweise durch ein so genanntes SFI (spatter free ignition)-Zündverfahren gezündet, bei dem der Schweißdraht mit einem geringen Schweißstrom beaufschlagt wird und kontinuierlich in Richtung des Werkstücks bis zur Berührung mit dem Werkstück nach vor bewegt wird, nach Auftreten eines Kurzschlusses die Drahtförderrichtung umgekehrt und der Schweißdraht kontinuierlich vom Werkstück wegbewegt wird, so dass beim Abheben des Schweißdrahtes der Lichtbogen gezündet wird. Gegebenenfalls wird der Schweißdraht auf einen vordefinierten Abstand zum Werkstück zurückbewegt. Vor dem SFI-Zündverfahren wird also der Schlacken-Entfernungsprozess durchgeführt, wobei das Entfernen der Schlacke bis zur Erkennung des Kurzschlusses automatisch erfolgt. Das auf den jeweiligen Schweißprozess abgestimmte Zündverfahren des Lichtbogens wird durch den Schlacken-Entfernungsprozess nicht negativ beeinflusst. Während des Schlacken-Entfernungsprozesses wird der Schweißdraht im Wesentlichen in Richtung Werkstück gefördert, wodurch die Aufschlagkraft des Schweißdrahtes am Werkstück erhöht wird und somit die Entfernung der Schlacke beschleunigt wird.

Von Vorteil ist auch, wenn der Motorstrom des Drahtvorschubgeräts überwacht wird und zumindest die erste Berührung des Schweißdrahtes mit dem Werkstück erfasst wird. Dadurch kann verhindert werden, dass durch die Förderkraft des Schweißdrahtes das Werkstück deformiert wird, auch wenn von der Kurzschlussüberwachung noch kein Kurzschluss erkannt wurde, und somit der Schlacken-Entfernungsprozess noch nicht beendet wurde.

In vorteilhafter Weise wird die Berührung des Schweißdrahtes durch Überschreitung eines vorgegebenen Grenzwertes des Motorstroms über eine definierte Zeitdauer erfasst.

Die zyklische, schnell wiederkehrende Vor-/Rückwärtsbewegung des Schweißdrahtes zum Zweck des Entfernens der Schlacke wird vorzugsweise mit einer einstellbaren Frequenz zwischen 50 Hz und 150 Hz durchgeführt. Durch diese relativ hohe Frequenz wird erreicht, dass der Schweißprozess durch die Dauer des Schlacken-Entfernungsprozesses nicht wesentlich verlängert wird.

Gemäß einem weiteren Merkmal der Erfindung ist vorgesehen, dass die zyklische, schnell wiederkehrende Vor-/Rückwärtsbewegung des Schweißdrahtes zum Zweck des Entfernens der Schlacke mit einer Frequenz durchgeführt wird, welche der Bewegungsfrequenz des Schweißdrahtes während des eingestellten Schweißprozesses entspricht.

Von Vorteil ist auch, dass mit Ende des Schlacken-Entfernungsprozesses der Schweißstrom auf einen für das nachfolgende Zündverfahren erforderlichen Wert erhöht wird, wodurch unmittelbar nach der Beendigung des Schlacken-Entfernungsprozesses ein Zünden des Lichtbogens ermöglicht wird.

Durch die Maßnahmen, dass der Schlacken-Entfernungsprozess nach einer eingestellten Zeit beendet wird, kann ein unnötiger Zeitverlust verhindert werden, wenn sich die Schlacke an dem zu kontaktierenden Ende des Schweißdrahtes durch den Schlacken-Entfernungsprozess nicht löst.

Dabei startet die eingestellte Zeit vorzugsweise dann, wenn der Schweißdraht das Werkstück zum ersten Mal berührt, ohne dass ein Kurzschluss erkannt wurde.

Die vorliegende Erfindung wird anhand der beigefügten, schematischen Zeichnungen näher erläutert. Darin zeigen:
- Fig. 1: eine schematische Darstellung einer Schweißmaschine bzw. eines Schweißgerätes;
- Fig. 2: das zu kontaktierende Ende eines Schweißdrahtes mit daran anhaftender Schlacke in schematischer Darstellung; und
- Fig. 3: schematisch die Zeitverläufe der Schweißspannung, des Schweißstromes und ein Bewegungsdiagramm für den Schweiß- draht während eines Beispiels eines Schweißprozesses mit dem erfindungsgemäßen Verfahren.

Einführend wird festgehalten, dass gleiche Teile des Ausführungsbeispiels mit gleichen Bezugszeichen versehen werden.

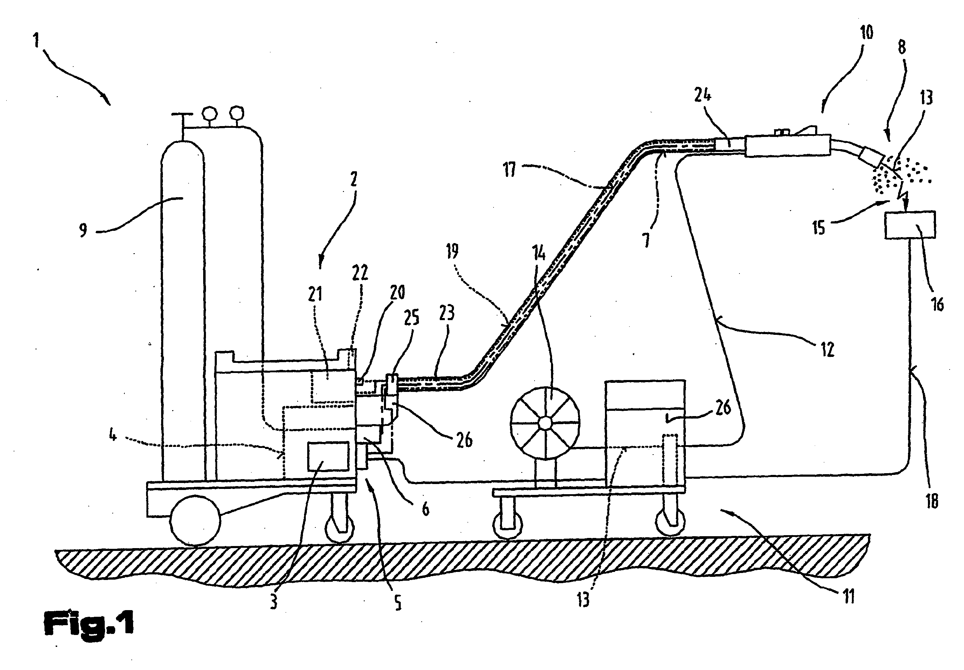

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Schutzgas 8, wie beispielsweise CO₂, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Drahtrolle 14 in den Bereich des Schweißbrenners 10 zugeführt wird. Selbstverständlich kann das Drahtvorschubgerät 11 auch im Schweißgerät 1, insbesondere im Grundgehäuse, integriert sein und nicht, wie in Fig. 1 dargestellt, als Zusatzgerät ausgebildet sein.

Es ist auch möglich, dass das Drahtvorschubgerät 11 den Schweißdraht 13 außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, zwischen der nicht abschmelzenden Elektrode oder dem Schweißdraht 13 und einem Werkstück 16 wird über eine Schweißleitung 17 vom Leistungsteil 3 der Stromquelle 2 dem Schweißbrenner 10, insbesondere der Elektrode, zugeführt, wobei die zu verschweißenden Werkstücke 16 über eine weitere Schweißleitung 18 ebenfalls mit dem Schweißgerät 1, insbesondere mit der Stromquelle 2, verbunden sind und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich kann auch die Kupplungsvorrichtung 24 für die Verbindung am Schweißgerät 1 eingesetzt werden.

Für die unterschiedlichen Schweißverfahren bzw. Schweißgeräte 1, wie beispielsweise WIG-Geräte oder MIG/MAG-Geräte oder Plasmageräte, müssen nicht alle zuvor benannten Komponenten verwendet bzw. eingesetzt werden. Beispielsweise ist es möglich, den Schweißbrenner 10 als luftgekühlten Schweißbrenner 10 auszuführen.

Mit dem beschriebenen Schweißgerät 1 kann nunmehr ein Schweißprozess, beispielsweise ein Kalt-Metall-Transfer-Schweißprozess, im folgenden CMT(Cold Metal Transfer)-Prozess genannt, durchgeführt werden. Ein Schweißprozess wird stets mit einer Zündung des Lichtbogens 15 gestartet, wobei die Zündung beispielsweise durch eine Kontaktzündung oder eine Hochfrequenzzündung erfolgen kann. Beispielsweise erfolgt das Zündverfahren zum Zünden des Lichtbogens 15 über das aus dem Stand der Technik bekannte Lift-Arc-Prinzip bzw. mit dem SFI(spatter free ignition)-Zündprozess. Dabei wird der Schweißdraht 13 mit einem geringen Schweißstrom bis zur Berührung mit dem Werkstück 16 kontinuierlich nach vor gefördert, worauf nach Auftreten eines Kurzschlusses die Drahtförderrichtung umgekehrt wird und der Schweißdraht 13 vom Werkstück 16 kontinuierlich wegbewegt wird, so dass beim Abheben des Schweißdrahtes 13 der Lichtbogen 15 gezündet wird und gegebenenfalls der Schweißdraht 13 auf einen vordefinierten Abstand zum Werkstück 16 zurückgefördert wird. Dadurch erfolgt die Bildung des Lichtbogens 15, wodurch nunmehr der eigentliche Schweißprozess gestartet werden kann.

Bei der soeben beschriebenen Kontaktzündung ist es wesentlich, dass der elektrisch leitende Schweißdraht 13 auch tatsächlich mit dem Werkstück 16 kontaktiert. Dies erkennt die Steuervorrichtung 4 anhand einer aus dem Stand der Technik bekannten Kurzschlusserkennung und ändert daraufhin die Förderrichtung des Schweißdrahtes 13.

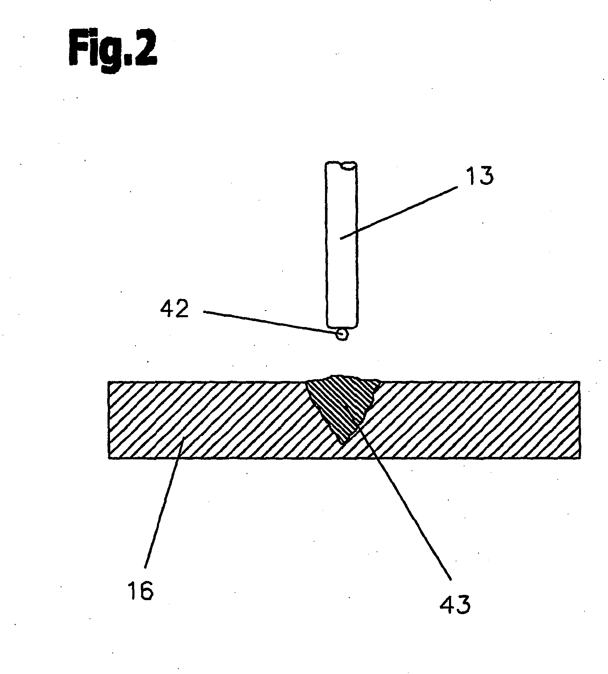

Befindet sich jedoch Schlacke 42, welche nicht oder nur schlecht elektrisch leitfähig ist, an dem zu kontaktierenden Ende des Schweißdrahtes 13, wie in Fig. 2 dargestellt, berührt diese zuerst das Werkstück 16, wodurch keine elektrische Kontaktierung und somit keine Zündung des Lichtbogens 15 erfolgen kann. Bereits eine geringe Menge an Schlacke 42, beispielsweise in Form einer Kugel oder Kappe, an dem zu kontaktierenden Ende des Schweißdrahtes 13 verhindert häufig die elektrische Kontaktierung und somit Zündung. Bekannte Verfahren für ein begünstigtes Zünden des Lichtbogens 15, wie die Bildung eines möglichst geringen Zündquerschnittes des Schweißdrahtes 13 am Ende eines Schweißprozesses, können dieses Problem nicht beseitigen.

Der Grund besteht darin, dass beim Beenden eines Schweißprozesses der Schweißdraht 13 aus einem Schmelzbad 43 zurückbewegt wird, wobei ein Teil der an der Oberfläche des Schmelzbades 43 befindlichen Schlacke 42 am Ende des Schweißdrahtes 13 haften bleibt. Auch kann sich Schlacke 42 am Ende des Schweißdrahtes 13 bilden, wenn am Ende des Schweißprozesses das flüssige Ende des Schweißdrahtes 13 erstarrt. Häufig erfolgt dies beim Schweißen von Stahl bzw. Stahllegierungen. Somit verhindert oder erschwert die Schlacke 42 beim Start des Schweißprozesses das Zünden des Lichtbogens 15, da kein Stromfluss vom Schweißdraht 13 zum Werkstück 16 zustande kommt. Deshalb wird auch kein Kurzschluss durch eine Kurzschlussüberwachung erkannt und der Schweißdraht 13 weiter in Richtung Werkstück 16 befördert, wodurch das Werkstück 16 gegebenenfalls beschädigt oder sogar deformiert werden kann. Dies kann beispielsweise durch die Überwachung des Motorstromes des Drahtvorschubgerätes 11 verhindert werden, indem die Förderung des Schweißdrahtes 13 gestoppt wird, wenn der Motorstrom einen vorgegebenen Grenzwert für eine bestimmte Zeitspanne übersteigt. Dies ist insofern möglich, da die Vorschubkraft und der Motorstrom proportional zueinander sind.

Damit nun ein Wiederzünden des Lichtbogens 15 erfolgen kann, muss beispielsweise das zu kontaktierende Ende des Schweißdrahtes 13 und damit die anhaftende, elektrisch nicht leitende Schlacke 42 manuell oder automatisiert entfernt oder das Drahtende abgeschnitten werden.

Eine weitere Möglichkeit wäre auch, den Auftreffwinkel des Schweißdrahtes 13 zum Werkstück 16 zu verändern, wodurch gegebenenfalls der leitende Schweißdraht 13 mit dem Werkstück 16 an der Randzone der Schlacke 42 kontaktiert, ein Kurzschluss erkannt wird und durch die Umkehr der Förderrichtung des Schweißdrahtes 13 der Lichtbogen 15 gezündet wird. Der dafür notwendige Aufwand für die Programmierung des Roboters, welcher den Schweißbrenner 10 führt, ist jedoch sehr hoch.

Erfindungsgemäß ist nun vorgesehen, dass die Schlacke 42 am Ende des Schweißdrahtes 13 durch eine entsprechende Bewegung des Schweißdrahtes 13 entfernt wird. Dabei wird der Schweißdraht 13 zyklisch mit hoher Geschwindigkeit eine bestimmte Wegstrecke nach vor und eine kleinere Wegstrecke als vorwärts wieder zurückgefördert. Daraus resultiert ein wiederholtes, stoßartiges Berühren des mit Schlacke 42 behafteten, zu kontaktierenden Endes des Schweißdrahtes 13 mit dem Werkstück 16, wodurch die Schlacke 42 vom Ende des Schweißdrahtes 13 durch die mechanische Krafteinwirkung beim Auftreffen des Schweißdrahtes 13 auf dem Werkstück 16 gelöst wird.

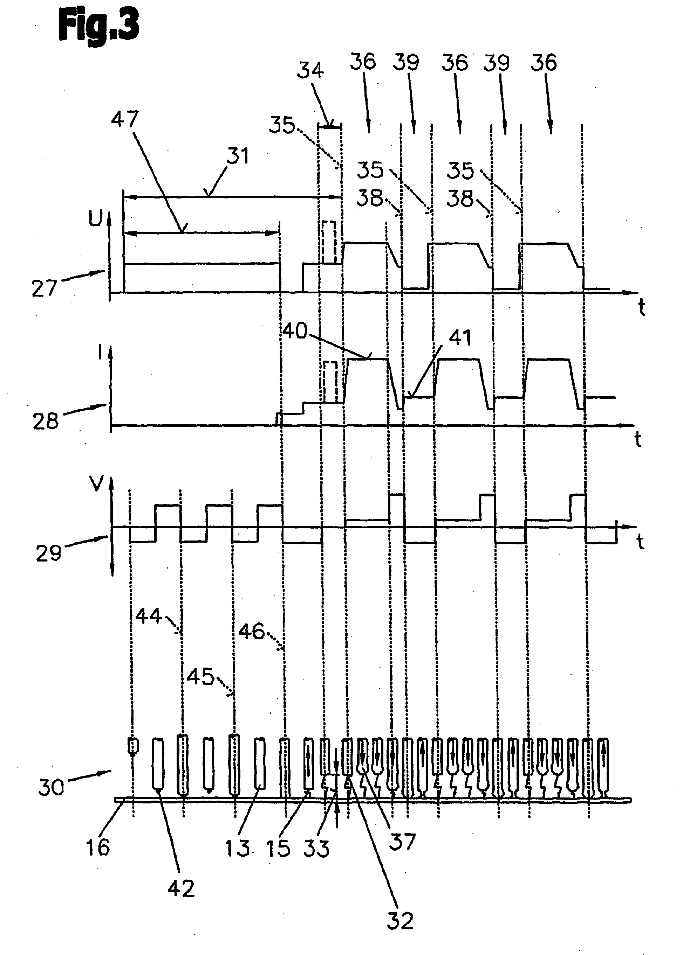

In Fig. 3 ist das erfindungsgemäße Verfahren zum Entfernen der Schlacke 42 vom Ende des Schweißdrahtes 13 während eines CMT-Schweißprozesses, anhand der Diagramme 27 bis 30, welche den zeitlichen Verlauf der Schweißspannung U, des Schweißstroms I, der Drahtvorschubgeschwindigkeit, und der Bewegungen bzw. Stellungen des Endes des Schweißdrahtes 13 relativ zum Werkstück 16 zeigen, schematisch dargestellt.

Bei dem dargestellten Schweißverfahren zum Steuern und/oder Regeln des Schweißgerätes 1 bzw. der Schweißstromquelle, wird eine abschmelzende Elektrode bzw. ein Schweißdraht 13 eingesetzt. Dabei erfolgt die Aufschmelzung des Werkstücks 16 und des Schweißdrahtes 13 über die ionisierte Plasmasäule bzw. den Lichtbogen 15, der zwischen dem Schweißdraht 13 und dem elektrischen Gegenpol am Werkstück 16 aufgebaut, sprich gezündet, wird. Dies erfolgt in einer Zündphase 31, in welcher das Zündverfahren, beispielsweise die SFI-Zündung, durchgeführt wird. Die Zündphase 31 wird beispielsweise derart gestartet, indem am Schweißbrenner 10 vom Benutzer ein Taster gedrückt wird bzw. dies automatisiert erfolgt.

Um zu verhindern, dass aufgrund der am Schweißdraht 13 haftenden Schlacke 42 der Lichtbogen 15 gegebenenfalls nicht gezündet wird, erfolgt der erfindungsgemäße Schlacken-Entfernungsprozess in einem Zeitintervall 47 des Zündverfahrens am Beginn der Zündphase 31.

Dabei wird mit dem Schlacken-Entfernungsprozess der Schweißdraht 13 nicht kontinuierlich zum Werkstück 16 gefördert, sondern mit einer bestimmten Frequenz vor, also zum Werkstück 16 bewegt, und wieder zurück, also vom Werkstück 16 entfernt. Der Schweißdraht 13 wird hierbei mit hoher Geschwindigkeit eine bestimmte Wegstrecke nach vor und eine kleinere Wegstrecke als vorwärts wieder zurückgefördert, so dass die Förderung des Schweißdrahtes 13-zum Werkstück 16 überwiegt. Hierbei liegt die Frequenz, mit welcher die Vor-/Rückwärtsbewegung des Schweißdrahtes 13 durchgeführt wird, bevorzugt zwischen 50 Hz und 150 Hz. Selbstverständlich ist es auch möglich, niedrigere oder höhere Frequenzen für den Schlacken-Entfernungsprozess zu verwenden. Grundsätzlich ist hierbei zu beachten, dass mit der Frequenz die Dauer für den Schlacken-Entfernungsprozess definiert wird. Deshalb sind insbesondere höhere Frequenzen von Bedeutung, da dadurch die Dauer wesentlich verkürzt wird.

Somit wird also der Schweißdraht 13 mit einer schnellen wiederkehrenden Vor-/Rückwärtsbewegung, beispielsweise mit einer eingestellten Frequenz von 75 Hz, bis zur Berührung mit dem Werkstück 16 gefördert.

Somit berührt die am Schweißdraht 13 haftende Schlacke 42, wie zum Zeitpunkt 44 ersichtlich, das Werkstück 16. Aufgrund der elektrisch nicht leitenden Schlacke 42 wird zu diesem Zeitpunkt 44 kein Kurzschluss von der Steuervorrichtung 4 bzw. der Kurzschlussüberwachung erkannt, und der Schweißdraht 13 entsprechend der eingestellten Frequenz von 75 Hz weiterhin wiederkehrend zurück und wieder vor bewegt. Daraus resultiert, dass der Schweißdraht 13, welcher mit einer entsprechenden Förderkraft gefördert wird, wiederkehrend mit einer bestimmten Aufschlagkraft am Werkstück 16 auftrifft. Schließlich wird die Schlacke 42 von dem zu kontaktierenden Ende des Schweißdrahtes 13 gelöst, wie zum Zeitpunkt 45 dargestellt, und die Steuervorrichtung 4 kann einen Kurzschluss detektieren, wie zum Zeitpunkt 46 dargestellt, und den Schlacken-Entfernungsprozess beenden.

Somit erfolgt ein Stromübergang vom Schweißdraht 13 auf das Werkstück 16, wodurch die Zündung des Lichtbogens 15 für den darauf folgenden Schweißprozess eingeleitet wird bzw. das Zündverfahren fortgesetzt wird. Mit dem Fortsetzen des Zündverfahrens wird auch beispielsweise die Bewegung des Schweißbrenners 10 oder des Werkstücks 16 bei automatisierten Schweißverfahren gestartet und die Schweißung durchgeführt. Selbstverständlich führt der Schweißbrenner 10 oder das Werkstück 16 beim Entfernen der Schlacke 42 keine Bewegung aus, so dass der geplante bzw. programmierte Startpunkt für die Schweißung beibehalten wird.

Die schnell wiederkehrende Vor-/Rückwärtsbewegung des Schweißdrahtes 13 wird beendet, wenn mit der ersten Berührung des Schweißdrahtes 13 mit dem Werkstück 16 ein Kurzschluss erkannt wird, also keine Schlacke 42 an dem zu kontaktierenden Ende des Schweißdrahtes 13 haftet. In diesem Fall findet also kein Schlacken-Entfernungsprozess statt, lediglich die wiederkehrende Vor-/Rückwärtsbewegung des Schweißdrahtes 13 am Beginn des Zündverfahrens, welche den Schlacken-Entfernungsprozess einleitet.

Im soeben beschriebenen Verfahren zum Entfernen der Schlacke 42 überwiegt die Förderung des Schweißdrahtes 13 zum Werkstück 16. Ebenso ist es auch möglich, dass zwischen den Zeitpunkten 44 und 46 nicht die Förderung des Schweißdrahtes 13 zum Werkstück 16 überwiegt, sondern dass lediglich im Wesentlichen so viel Schweißdraht 13 wieder nach vor gefördert wird, wie zuvor zurückgefördert wurde.

Dies erfolgt beispielsweise derart, dass die erste Berührung des Schweißdrahtes 13 mit dem Werkstück 16, nachdem der Schweißdraht 13 mit der wiederkehrenden Vor-/Rückwärtsbewegung zum Werkstück 16 gefördert wurde, durch eine Motorstromüberwachung erkannt wird. Hierbei werden entsprechend die Ströme des Motors bzw. der Motoren, welcher bzw. welche den Schweißdraht 13 von der Vorratstrommel 14 bis in den Schweißbrenner 10 bzw. zum Werkstück 16 fördern, überwacht.

Wird von der Motorstromüberwachung über eine gewisse Zeit bzw. eine definierte Zeitdauer ein zu höher Motorstrom erkannt bzw. gemessen, verhindert die Schlacke 42 einen Kurzschluss zwischen Werkstück 16 und Schweißdraht 13. Zum Entfernen der Schlacke 42 wird nun die Förderung des Schweißdrahtes 13 derart geändert, dass bei der schnellen wiederkehrenden Vor-/Rückwärtsbewegung im Wesentlichen bei der Vorwärtsbewegung der Schweißdraht 13 so weit bewegt wird, wie dieser bei der Rückwärtsbewegung bewegt wurde. Dadurch wird die Schlacke 42 an dem zu kontaktierenden Ende des Schweißdrahtes 13 entfernt sowie die Gefahr einer Deformation des Werkstücks 16 bzw. des Schweißdrahtes 13 aufgrund des wiederkehrenden Auftreffens des Schweißdrahtes 13 auf das Werkstück 16 wesentlich reduziert.

Somit wird der Schlacken-Entfernungsprozess mit dem Erkennen eines Kurzschlusses beendet und das Zündverfahren kann fortgesetzt werden.

Selbstverständlich ist auch ein Verfahren zum Entfernen der Schlacke 42 möglich, bei dem der Schweißdraht 13 bis zur ersten Berührung mit dem Werkstück 16 kontinuierlich nach vor gefördert wird. Erkennt die Steuervorrichtung 4 nach einer vorgegebenen Zeit keinen Kurzschluss oder steigt der Motorstrom eine gewisse Zeit über einen vorgegebenen Wert, d.h., dass sich Schlacke 42 an dem zu kontaktierenden Ende des Schweißdrahtes 13 befindet, wird das Zündverfahren unterbrochen und der Schlacken-Entfernungsprozess eingeleitet. Hierbei erfolgt also der Schlacken-Entfernungsprozess im Zeitintervall 47 während des Zündverfahrens (nicht dargestellt), welches wiederum mit Betätigen eines Tasters eingeleitet wurde.

Die schnell wiederkehrende Vor-/Rückwärtsbewegung des Schweißdrahtes 13 wird beispielsweise mit einer eingestellten Frequenz von 75 Hz durchgeführt. Erkennt die Steuervorrichtung 4 bzw. die Kurzschlussüberwachung nach einigen Berührungen des Schweißdrahtes 13 mit dem Werkstück 16 einen Kurzschluss, wurde die Schlacke 42 erfolgreich gelöst und der Schweißprozess wird eingeleitet bzw. das Zündverfahren fortgesetzt.

Der Schlacken-Entfernungsprozess kann selbstverständlich für alle bekannten Zündverfahren, wie beispielsweise auch die Hochfrequenzzündung, eingesetzt werden.

Beispielsweise erfolgt der Schlacken-Entfernungsprozess bei der Hochfrequenzzündung derart, dass vor der HF-Zündung der Schlacken-Entfernungsprozess durchgeführt wird (nicht dargestellt). Ist der Schlacken-Entfernungsprozess beendet, wird der Schweißdraht 13 entsprechend positioniert und das Zündverfahren gestartet. Gemäß der HF-Zündung wird der Lichtbogen 15 mit einem Hochfrequenzimpuls berührungslos gezündet.

Damit während des Schlacken-Entfernungsprozesses ein Zünden des Lichtbogens 15 nahezu gänzlich ausgeschlossen werden kann, wird der Schweißstrom I bevorzugt auf einen niedrigen Wert, beispielsweise unter 10 A, gesenkt. Somit wird auch zum Zeitpunkt 45, an welchem die Schlacke 42 entfernt wird, gewährleistet, dass der Schweißdraht 13 nicht am Werkstück 16 festbrennt oder versehentlich bei der folgenden Rückwärtsbewegung des Schweißdrahtes 13 ein Lichtbogen 15 gezündet wird. Nach Beendigung des Schlacken-Entfernungsprozesses wird der Schweißstrom I wieder auf den ursprünglich eingestellten Schweißstrom I erhöht, so dass das folgende Zündverfahren bzw. der folgende Schweißprozess uneingeschränkt durchgeführt werden kann.

Der Schlacken-Entfernungsprozess kann beispielsweise auch zeitlich begrenzt sein, so dass der Schlacken-Entfernungsprozess nicht unnötig viel Zeit in Anspruch nimmt, wenn die Schlacke 42 durch die wiederkehrende Vor-/Rückwärtsbewegung bzw. durch die Berührungen mit dem Werkstück 16 nicht gelöst werden kann. Hierbei wird die Zeit gestartet, sobald die auf dem zu kontaktierenden Ende des Schweißdrahtes 13 haftende Schlacke 42 zum ersten Mal das Werkstück 16 berührt. Dies wird gemäß der bereits beschriebenen Motorstromüberwachung erkannt.

Selbstverständlich kann mit dem erfindungsgemäßen Schlacken-Entfernungsprozess nicht nur die am zu kontaktierenden Ende des Schweißdrahtes 13 haftende Schlacke 42 entfernt werden, sondern auch eine gegebenenfalls am Werkstück 16 haftende Schlacke 42. In diesem Fall wird ebenso das Zünden des Lichtbogens 15 verhindert, wobei dementsprechend mit einer der zuvor beschriebenen Varianten des Schlacken-Entfernungsprozesses die Schlacke 42 vom Werkstück 16 entfernt wird. Hierbei kann es natürlich auch vorkommen, dass die Schlacke 42 gleichzeitig an dem zu kontaktierenden Ende des Schweißdrahtes 13 sowie am Werkstück 16 entfernt wird.

Nachdem also gegebenenfalls der Schlacken-Entfernungsprozess während des Zündverfahrens durchgeführt wurde und das Zündverfahren beendet wurde, folgt der eigentliche Schweißprozess.

Nach dem Zünden des Lichtbogens 15, beispielsweise mit dem SFI-Zündprozess, erfolgt die Rückförderung des Schweißdrahtes 13 vom Werkstück 16 bis an einen oberen Totpunkt 32, bis ein definierter Abstand 33 erreicht ist und/oder eine definierte Zeitdauer abgelaufen ist. Der Strom ist während der Zündphase 31 in einer oder mehreren Stufe(n) derart begrenzt, dass ein Schmelzen des Schweißdrahtes 13 nicht erfolgen kann.

Nach dem Zünden des Lichtbogens 15 bzw. Erreichen des Abstandes 33 kann vor dem eigentlichen Schweißprozess eine erste kurze Stabilisierungsphase 34 mit erhöhter Energieeinbringung (wie mit strichlierten Linien dargestellt) über eine definierte Zeitdauer und anschließend der durch zyklisch wiederkehrende Schweißprozessphasen aufgebaute Schweißprozess durchgeführt werden. Dies hat den Vorteil, dass durch diese kurze Stabilisierungsphase 34 mit hoher Energieeinbringung eine Stabilisierung des Lichtbogens 15 und/oder eine Erwärmung des Werkstücks 16 bzw. Schmelzbades geschaffen wird. Des Weiteren wird der Schweißdraht 13 durch den Zündprozess erwärmt und der nachfolgende Schweißprozess kann mit vorerwärmtem Schweißdraht 13 beginnen, wodurch die Schweißqualität wesentlich verbessert wird.

Nach der Zündphase 31 bzw. der Stabilisierungsphase 34 erfolgt zum Zeitpunkt 35 der eigentliche Schweißprozess, wobei beispielsweise ein Kalt-Metall-Transfer(Cold Metal Transfer-CMT)-Schweißprozess durchgeführt wird, welcher nun kurz beschrieben wird.

Beim CMT-Prozess wird der Schweißdraht 13 in der als Lichtbogenphase 36 bezeichneten Prozessphase bis zur Berührung mit dem Werkstück 16 nach vor gefördert. In der Lichtbogenphase 36 erfolgt ein Anschmelzen des Schweißdrahts 13, so dass am Schweißdrahtende ein Tropfen 37 entsteht. Der Schweißstrom und/oder die Schweißspannung in der Lichtbogenphase 36 wird derart geregelt, dass keine Tropfenablösung erfolgt und zum Zeitpunkt 38 ein Kurzschluss eintritt, welcher die Kurzschlussphase 39 einleitet. In der Kurzschlussphase 39 wird die Drahtförderung umgekehrt, so dass der Schweißdraht 13 bis zum Aufbrechen des Kurzschlusses, d.h. der Bildung des Lichtbogens 15, und/oder dem definierten Abstand 33 und/oder eine definierte Zeitdauer vom Werkstück 16 zurückgefördert wird. Zum Zeitpunkt 35 tritt erneut die Lichtbogenphase 36 ein, worauf die Bewegungsrichtung des Schweißdrahts 13 an einem oberen Totpunkt 32 erneut umgekehrt wird und der Schweißdraht 13 in Richtung des Werkstücks 16 bewegt wird.

Der Schweißdraht 13 erfährt also während des Schweißprozesses eine oszillierende Bewegung mit einer bestimmten Bewegungsfrequenz, welche der Anzahl der Kurzschlüsse pro Sekunde entspricht. Beispielsweise beträgt die Bewegungsfrequenz 75 Hz, woraus sich also 75 Kurzschlüsse pro Sekunde ergeben. Dabei wird das Drahtvorschubgerät 11 im Wesentlichen so gesteuert, dass ein negatives Signal bzw. eine Rückwärtsförderung des Schweißdrahtes 13 in der Kurzschlussphase 39 erfolgt, und anschließend ein Lichtbogen 15 aufgebaut wird, und ein positives Signal bzw. eine Vorwärtsförderung des Schweißdrahtes 13 in Richtung des Werkstücks 16 in der Lichtbogenphase 36 erfolgt, in der das Erhitzen bzw. Anschmelzen des Schweißdrahtes 13 zur Tropfenbildung erfolgt. Die Steuerung der Bewegungsrichtung des Schweißdrahtes 13 muss jedoch nicht unbedingt mit dem Auftreten der Lichtbogenphase 36 bzw. der Kurzschlussphase 39 korrelieren, da die Lichtbogenphase 36 durch eine gezielte Energieeinbringung über die Regelung des Stromniveaus im Schweißkreis beispielsweise bereits während der Rückwärtsbewegung des Schweißdrahtes 13 erfolgen kann. D.h. es kann auch bei bereits vorhandenem Lichtbogen 15 der Schweißdraht 13 weiterhin bis zu einem definierten Zeitpunkt bzw. Abstand vom Werkstück 16 weggefördert werden.

Die Tropfenablöse erfolgt derart, dass nach Erreichen des Totpunktes 32 eine Vorwärtsbewegung des Schweißdrahtes 13 bis zur Berührung des Zusatzwerkstoffes mit dem Werkstück 16, insbesondere einem Schmelzbad, erfolgt. Durch die Oberflächenspannung des Tropfens 37 am Schweißdraht 13 und im Schmelzbad bzw. weiterer bekannter wirkender physikalischer Effekte wird dieser vom Schweißdraht 13 gelöst. Durch die Rückwärtsbewegung des Schweißdrahtes 13 wird das Wiederzünden des Lichtbogens 15 begünstigt. Zur Unterstützung der Tropfenablöse kann natürlich eine Erhöhung, insbesondere eine impulsartige Erhöhung des Schweißstromes I in der Kurzschlussphase 39 durchgeführt werden (nicht dargestellt). Für die Dauer des CMT-Prozesses wechseln sich die Lichtbogenphase 36 und die Kurzschlussphase 39 im gezeigten Ausführungsbeispiel periodisch ab.

Aus Fig. 3 ist auch ersichtlich, dass die Spannung U bzw. der Strom I mit Überschreiten des Zeitpunkts 35 auf ein erstes Niveau angehoben werden. Gegebenenfalls kann dieses Niveau als Arbeitsniveau festgelegt werden, das während der gesamten Lichtbogenphase 36 und der Kurzschlussphase 39 konstant gehalten wird bzw. nach einem Schweißprozessprofil verläuft. Wie aus dem Diagramm 28 hervorgeht, weist bevorzugt der Schweißstrom I einen ersten Anteil, den Arbeitsstrom 40, und zumindest einen weiteren Anteil, den Grundstrom 41, welcher ein sicheres Wiederzünden des Lichtbogens 15 gewährleistet, auf.

Der Grundstrom 41 ist gegenüber dem Arbeitsstrom 40 bevorzugt verhältnismäßig klein, wobei die Stromstärke des Arbeitsstroms 40 beispielsweise um das 1,5 bis 10-fache, insbesondere das 4 bis 8-fache, höher als die Stromstärke des Grundstroms 41 sein kann. Der Grundstrom 41 kann beispielsweise 5 A bis 50 A, insbesondere ca. 10 A bis 30 A, betragen, wogegen der Arbeitsstrom 40 beispielsweise 50 A bis 500 A betragen kann.

Auf weitere, verfahrenstechnische Details des CMT-Prozesses wird an dieser Stelle nicht eingegangen, da dieser für Schweißprozesse mit konstanter und wechselnder Polarität des Schweißstromes am Schweißdraht 13 bzw. dem Werkstück 16 bereits aus dem Stand der Technik bekannt ist.

Selbstverständlich kann der Schlacken-Entfernungsprozess auch am Ende einer mit einem entsprechenden Schweißprozess gefertigten Schweißnaht oder eines gefertigten Werkstücks 16, bestehend aus mehreren Schweißnähten, durchgeführt werden. Somit wird die Schlacke 42 vom zu kontaktierenden Ende des Schweißdrahtes 13 gelöst und dadurch ein sicheres Zünden des Lichtbogens 15 am Beginn der folgenden Schweißnaht am Werkstück 16 gewährleistet.

## Patentansprüche

1. Verfahren zum Schweißen eines Werkstücks (16) mit einem Schweißbrenner (10) mit einem abschmelzenden Schweißdraht (13), welcher während eines Schweißprozesses, während dem ein Lichtbogen (15) zwischen dem Schweißdraht (13) und dem Werkstück (16) brennt, mittels eines Drahtvorschubgeräts (11) im Wesentlichen in Richtung des Werkstücks (16) bewegt wird, wobei ein Prozess zur Entfernung von Schlacke (42) am Ende des Schweißdrahtes (13) gestartet und durchgeführt wird, **dadurch gekennzeichnet, dass** mit Beginn des Schlacken-Entfernungsprozesses der Schweißstrom (I) auf ein Minimum gesenkt wird, und beim Schlacken-Entfernungsprozess der Schweißbrenner (10) keine Bewegung ausführt und der Schweißdraht (13) mit einer schnellen wiederkehrenden Vor-/Rückwärtsbewegung zyklisch eine vorgegebene Weglänge in Richtung Werkstück (16) und um eine kleinere Wegstrecke wieder vom Werkstück (16) wegbewegt wird, sodass die Förderung des Schweißdrahtes (13) zum Werkstück (16) überwiegt, bis von einer Kurzschlussüberwachung ein Kurzschluss zwischen dem Schweißdraht (13) und dem Werkstück (16) erkannt wird, worauf der Schlacken-Entfernungsprozess beendet wird.

2. Verfahren nach Anspruch 1, **dadurch gekennzeichnet, dass** der Schlacken-Entfernungsprozess in einem Zeitintervall (47) zu Beginn eines Verfahrens zum Zünden des Lichtbogens (15) durchgeführt wird.

3. Verfahren nach Anspruch 1, **dadurch gekennzeichnet, dass** der Schlacken-Entfernungsprozess in einem Zeitintervall (47) während eines Verfahrens zum Zünden des Lichtbogens (15) durchgeführt wird.

4. Verfahren nach Anspruch 1, **dadurch gekennzeichnet, dass** der Schlacken-Entfernungsprozess in einem Zeitintervall (47) vor einem Verfahren zum Zünden des Lichtbogens (15) durchgeführt wird.

5. Verfahren nach einem der Ansprüche 1 bis 4, **dadurch gekennzeichnet, dass** nach dem Entfernen der Schlacke (42) der Lichtbogen (15) durch ein Zündverfahren gezündet wird, bei dem der Schweißdraht (13) mit einem geringen Schweißstrom (I) beaufschlagt wird und kontinuierlich in Richtung des Werkstücks (16) bis zur Berührung mit dem Werkstück (16) nach vor bewegt wird, nach Auftreten eines Kurzschlusses die Drahtförderrichtung umgekehrt und der Schweißdraht (13) kontinuierlich vom Werkstück (16) wegbewegt wird, so dass beim Abheben des Schweißdrahtes (13) der Lichtbogen (15) gezündet wird.

6. Verfahren nach einem der Ansprüche 1 bis 5, **dadurch gekennzeichnet, dass** der Motorstrom des Drahtvorschubgeräts (11) überwacht wird und zumindest die erste Berührung des Schweißdrahtes (13) mit dem Werkstück (16) erfasst wird.

7. Verfahren nach Anspruch 6, **dadurch gekennzeichnet, dass** die Berührung des Schweißdrahtes (13) durch Überschreitung eines vorgegebenen Grenzwertes des Motorstromes über eine definierte Zeitdauer erfasst wird.

8. Verfahren nach einem der Ansprüche 1 bis 7, **dadurch gekennzeichnet, dass** die zyklische, schnell wiederkehrende Vor-/Rückwärtsbewegung des Schweißdrahtes (13) zum Zweck des Entfernens der Schlacke (42) mit einer einstellbaren Frequenz zwischen 50 Hz und 150 Hz durchgeführt wird.

9. Verfahren nach Anspruch 8, **dadurch gekennzeichnet, dass** die zyklische, schnell wiederkehrende Vor-/Rückwärtsbewegung des Schweißdrahtes (13) zum Zweck des Entfernens der Schlacke (42) mit einer Frequenz durchgeführt wird, welche der Bewegungsfrequenz des Schweißdrahtes (13) während des eingestellten Schweißprozesses entspricht.

10. Verfahren nach einem der Ansprüche 1 bis 9, **dadurch gekennzeichnet, dass** mit dem Ende des Schlacken-Entfernungsprozesses der Schweißstrom (I) auf einen für das nachfolgende Zündverfahren erforderlichen Wert erhöht wird.

11. Verfahren nach einem der Ansprüche 1 bis 10, **dadurch gekennzeichnet, dass** der Schlacken-Entfernungsprozess nach einer eingestellten Zeit beendet wird.

12. Verfahren nach Anspruch 11, **dadurch gekennzeichnet, dass** die eingestellte Zeit, nach welcher der Schlacken-Entfernungsprozess beendet wird, gestartet wird, wenn der Schweißdraht (13) das Werkstück (16) zum ersten Mal berührt, ohne dass ein Kurzschluss erkannt wurde.

## Claims

1. A method for welding a workpiece (16) with a welding torch (10) with a consuming welding wire (13), the latter being moved substantially towards the workpiece (16) by a wire feeder (11) during a welding process, with an electric arc (15) burning between the welding wire (13) and the workpiece (16), wherein a process is started and performed for removing slag (42) from the end of the welding wire (13), **characterised in that** the welding current (I) is reduced to a minimum value as soon as the slag-removing process is started, and the welding torch (10) does not carry out any movement during the slag-removing process, and the welding wire (13) is cyclically moved towards the workpiece (16) by a predefined path length and is moved away again from the workpiece (16) by a smaller path length in a fast recurrent forward/backward movement so that conveyance of the welding wire (13) towards the workpiece (16) will predominate, until a short-circuit is detected between the welding wire (13) and the workpiece (16) by a short-circuit monitoring unit upon which the slag-removing process is finished.

2. The method according to claim 1, **characterised in that** the slag-removing process is performed at a time interval (47) at the beginning of a method for igniting the electric arc (15).

3. The method according to claim 1, **characterised in that** the slag-removing process is performed at a time interval (47) during a method for igniting the electric arc (15).

4. The method according to claim 1, **characterised in that** the slag-removing process is performed at a time interval (47) prior to a method for igniting the electric arc (15).

5. The method according to any one of claims 1 to 4, **characterised in that** after the slag (42) has been removed, the electric arc (15) is ignited by an ignition method in which a low welding current (I) is applied to the welding wire (13) and the latter is continuously moved forwards towards the workpiece (16) until it contacts the workpiece (16), the wire-feed direction is reversed after a short-circuit has occurred, and the welding wire (13) is continuously moved away from the workpiece (16) so that the electric arc (15) is ignited when the welding wire (13) is lifted off.

6. The method according to any one of claims 1 to 5, **characterised in that** the motor current of the wire feeder (11) is monitored, and at least the first contact of the welding wire (13) with the workpiece (16) is detected.

7. The method according to claim 6, **characterised in that** the contact of the welding wire (13) is detected by a predefined threshold value of the motor current being exceeded over a defined period of time.

8. The method according to any one of claims 1 to 7, **characterised in that** the cyclic, fast recurrent forward/backward movement of the welding wire (13) is carried out for removing the slag (42) at an adjustable frequency of between 50 Hz and 150 Hz.

9. The method according to claim 8, **characterised in that** the cyclic, fast recurrent forward/backward movement of the welding wire (13) is carried out for removing the slag (42) at a frequency which corresponds to the movement frequency of the welding wire (13) during the set welding process.

10. The method according to any one of claims 1 to 9, **characterised in that** as soon as the slag-removing process ends, the welding current (I) is increased to a value necessary for the ignition process following thereupon.

11. The method according to any one of claims 1 to 10, **characterised in that** the slag-removing process is finished after a set period of time.

12. The method according to claim 11, **characterised in that** the set period of time, after which the slag-removing process is finished, is started when the welding wire (13) first contacts the workpiece (16), with no short-circuit having been detected.

## Revendications

1. Procédé de soudage d'une pièce (16) avec un chalumeau (10) avec un fil d'apport fusible (13), qui est déplacé au cours d'un processus de soudage, pendant lequel un arc électrique (15) brûle entre le fil d'apport (13) et la pièce (16), sensiblement dans la direction de la pièce (16) au moyen d'un appareil d'avancement de fil (11), dans lequel procédé est lancé et réalisé un processus d'enlèvement de scories (42) à l'extrémité du fil d'apport (13), **caractérisé en ce qu'**au lancement du processus d'enlèvement de scories, le courant de soudage (I) est réduit à un minimum et, lors du processus d'enlèvement de scories, le chalumeau (10) n'effectue aucun mouvement et le fil d'apport (13) est déplacé cycliquement d'une longueur de course prédéfinie dans la direction de la pièce (16) par un mouvement de va-et-vient rapide répété et à nouveau écarté de la pièce (16) d'une distance plus petite, de sorte que l'acheminement du fil d'apport (13) jusqu'à la pièce (16) prévale jusqu'à ce qu'un court-circuit entre le fil d'apport (13) et la pièce (16) soit détecté par un contrôle de court-circuit, après quoi le processus d'enlèvement de scories est terminé.

2. Procédé selon la revendication 1, **caractérisé en ce que** le processus d'enlèvement de scories est réalisé dans un intervalle de temps (47) au lancement d'un procédé d'amorçage de l'arc électrique (15).

3. Procédé selon la revendication 1, **caractérisé en ce que** le processus d'enlèvement de scories est réalisé dans un intervalle de temps (47) pendant un procédé d'amorçage de l'arc électrique (15).

4. Procédé selon la revendication 1, **caractérisé en ce que** le processus d'enlèvement de scories est réalisé dans un intervalle de temps (47) précédant un procédé d'amorçage de l'arc électrique (15).

5. Procédé selon l'une quelconque des revendications 1 à 4, **caractérisé en ce que**, après l'enlèvement des scories (42), l'arc électrique (15) est amorcé par un procédé d'amorçage, dans lequel le fil d'apport (13) est alimenté par un faible courant de soudage (I) et déplacé vers l'avant en continu dans la direction de la pièce (16) jusqu'à venir en contact avec la pièce (16), le sens d'acheminement du fil est inversé après apparition d'un court-circuit et le fil d'apport (13) est écarté en continu de la pièce (16) de sorte que l'arc électrique (15) soit amorcé lorsque le fil d'apport (13) est relevé.

6. Procédé selon l'une quelconque des revendications 1 à 5, **caractérisé en ce que** le courant moteur de l'appareil d'avancement de fil (11) est contrôlé et au moins le premier contact entre le fil d'apport (13) et la pièce (16) est enregistré.

7. Procédé selon la revendication 6, **caractérisé en ce que** le contact du fil d'apport (13) est enregistré par le courant moteur dépassant une valeur limite prédéfinie sur une période de temps définie.

8. Procédé selon l'une quelconque des revendications 1 à 7, **caractérisé en ce que** le mouvement de va-et-vient cyclique, rapidement et répété du fil d'apport (13) est réalisé à des fins d'enlèvement des scories (42) à une fréquence réglable entre 50 Hz et 150 Hz.

9. Procédé selon la revendication 8, **caractérisé en ce que** le mouvement de va-et-vient, cyclique et rapidement répété du fil d'apport (13) est réalisé à des fins d'enlèvement des scories (42) à une fréquence qui correspond à la fréquence de mouvement du fil d'apport (13) pendant le procédé de soudage réglé.

10. Procédé selon l'une quelconque des revendications 1 à 9, **caractérisé en ce qu'**à la fin du processus d'enlèvement de scories, le courant de soudage (I) est augmenté à une valeur requise pour le procédé d'amorçage suivant.

11. Procédé selon l'une quelconque des revendications 1 à 10, **caractérisé en ce que** le processus d'enlèvement de scories est terminé après une période de temps réglée.

12. Procédé selon la revendication 11, **caractérisé en ce que** la période de temps réglée, après laquelle le processus d'enlèvement de scories est terminé, est lancée lorsque le fil d'apport (13) touche pour la première fois la pièce (16) sans qu'un court-circuit ne soit détecté.
